(19) **Europäisches Patentamt**

**European Patent Office**

**Office européen des brevets**

(11) **EP 1 056 042 A2**

(12) **EUROPEAN PATENT APPLICATION**

(43) Date of publication:
**29.11.2000 Bulletin 2000/48**

(51) Int. Cl.[7]: **G06N 3/12**

(21) Application number: **00111491.7**

(22) Date of filing: **29.05.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **28.05.1999 JP 15054199**

(71) Applicant:
**YAMAHA HATSUDOKI KABUSHIKI KAISHA
Iwata-shi Shizuoka-ken (JP)**

(72) Inventors:
• **Kishi, Tomoaki,
c/o Yamaha Hatsudoki K.K.
Iwata-Shi, Shizuoka-ken (JP)**
• **Kamihira, Ichikai,
c/o Yamaha Hatsudoki K.K.
Iwata-Shi, Shizuoka-ken (JP)**

(74) Representative:
**Grünecker, Kinkeldey,
Stockmair & Schwanhäusser
Anwaltssozietät
Maximilianstrasse 58
80538 München (DE)**

(54) **An online type of optimization control method and an optimization control device**

(57)    An online type of optimization control method
wherein control parameters affecting the characteristics
of control subjects are made to evolve while being made
to reflect actual evaluations by repeating the steps of;
creating a plurality of individuals corresponding to the
control parameters, deeming a set of the individuals to
be one generation, choosing parent individuals for the
next generation from the individuals set while causing at
least actual evaluations to be reflected, and creating a
set of individuals for the next generation on the basis of
at least the parent individuals, wherein an evaluation
model is created on the basis of relation between each
individual and the evaluation for the individual, and that
the evaluation model is used before making the actual
evaluation.

EP 1 056 042 A2

**Description**

This invention relates to a method and a device for controlling optimization of control subjects.

The applicant has already proposed in a Japanese patent application No. 9-264604 an optimization control method of optimizing a control module for controlling a control object by evolving the control module.

According to the above optimization control method, out of the control parameters used in a control module, those affecting the characteristics of control subjects are coded to create a generation of a plurality of chromosomes (individuals), characteristics of the control subjects when the individuals of the generation are used are respectively evaluated, a plurality of parent individuals for the next generation including individuals of high evaluations are chosen, the parent individuals are crossed to generate a plurality of individuals of the next generation, and also new individuals are generated at random by mutation. The control parameters of the control module are evolved to those capable of obtaining characteristics of high evaluations by repeating the above process.

However, the above optimization control method has a problem of poor efficiency. That is, the evolution of each generation does not always proceed to a desirable direction, in some cases for generations in directions the user does not want, because the choice of the parent individuals for the next generation is made at random for individuals other than those having high evaluations, and individuals generated by mutation are made to be contained in each generation.

To improve the efficiency of the evolution process in the optimization control method, it is conceivable to use only the best and the second best individuals of a generation as the parent individuals for the next generation, or to stop the mutational generation of individuals. However, a too strict choice of the parent individuals and stopping the mutational generation of individuals also have problems of ending up in restricting the direction of evolution in the initial evaluation stage and the evolution proceeding to a characteristic not desired in the least due to an error in the initial evaluation. In particular when evaluation is made directly by a person, it is impossible to evaluate the characteristic always exactly along a constant standard and the evaluation is very likely to vary with ever changing emotions and physical conditions of the person. Therefore, it is undesirable to restrict the direction evolution as described above by the initial stage of evaluation.

In view of the above problems, this invention intends to provide a method and a device for controlling the optimization of control subjects, making it possible to improve the evolution efficiency while retaining the advantages of the optimization control method previously proposed.

To accomplish the above object, the invention of claim 1 relates to an online type of optimization control method wherein control parameters affecting the characteristics of control subjects are made to evolve while being made to reflect actual evaluations by repeating the steps of; creating a plurality of individuals corresponding to the control parameters, deeming a set of the individuals to be one generation, choosing parent individuals for the next generation from the individuals set while causing at least actual evaluations to be reflected, and creating a set of individuals for the next generation on the basis of at least the parent individuals, wherein an evaluation model is created on the basis of relation between each individual and the evaluation for the individual, and that the evaluation model is used before making the actual evaluation.

The invention of claim 15 relates to an optimization control device comprising; a control section, an online type of optimization process section, and an evolution efficiency improving section;

the control section is adapted to output an operation amount for a control subject on the basis of specified input information,
the online type of optimization process section is adapted to cause control parameters affecting the characteristics of control subjects to evolve while reflecting actual evaluations by being adapted to repeat the steps of;

creating a plurality of individuals corresponding to the control parameters in the control device, deeming a set of the individuals to be one generation,
choosing parent individuals for the next generation from the set of individuals while causing at least actual evaluations to be reflected, and creating a set of individuals for the next generation on the basis of at least the parent individuals,
the evolution efficiency improving section comprising;
an evaluation model creating section for creating an evaluation model on the basis of relation between an individual and the actual evaluation of the individual, and an individuals set operating section for pre-processing the individuals set by the use of the evaluation model before making actual evaluation.

Other preferred embodiments of the present invention are laid down in further dependent claims.

In the following, the present invention is explained in greater detail with respect to several embodiments thereof in conjunction with the accompanying drawings, wherein:

FIG. 1 is a simplified drawing showing the relation between an engine 1 and a controller 10 for executing an optimization control method for control subjects according to the invention;

FIG. 2 is a general block diagram of the controller 10;

FIG. 3 is a general block diagram of an electronic throttle control module;

FIG. 4 shows a few examples of static characteristics of the throttle;

FIG. 5 shows a few examples of dynamic characteristics of the throttle;

FIG. 6 shows an example of codes as genic individuals;

FIG. 7 is a flowchart of the optimization process with the controller;

FIG. 8 shows the concept of the individuals set process in the individuals set operating section;

FIG. 9 shows the flowchart of an example of individuals set process in the individuals set operating section;

FIG. 10 is a general block diagram of an evolution efficiency improvement section as another embodiment;

FIG. 11 shows the concept of an evaluation model creating method in a data accumulation type of evaluation model creating section;

FIG. 12 shows the concept of a representative evaluation value calculating method in the representative evaluation value calculating section;

FIG. 13 is a flowchart showing an example process in the individuals set operating section;

FIG. 14 is a flowchart showing another embodiment of operation method applied to the individuals set in the individuals set operating section; and

FIG. 15 is a flowchart showing still another embodiment of the operating method applied to the individuals set in the individuals set operating section;

Forms of Embodying the Invention

Forms of embodying the control method and device for optimizing control subjects according to the invention will be hereinafter described in reference to a few examples shown in appended drawings.

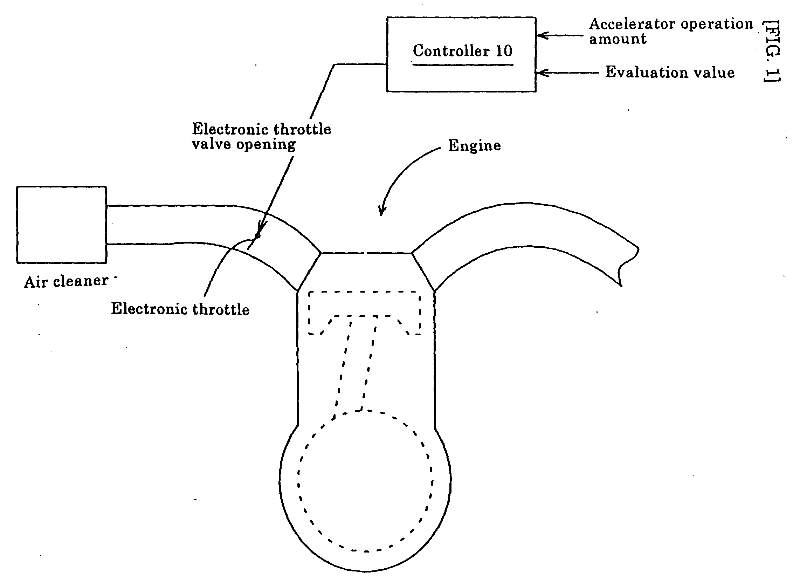

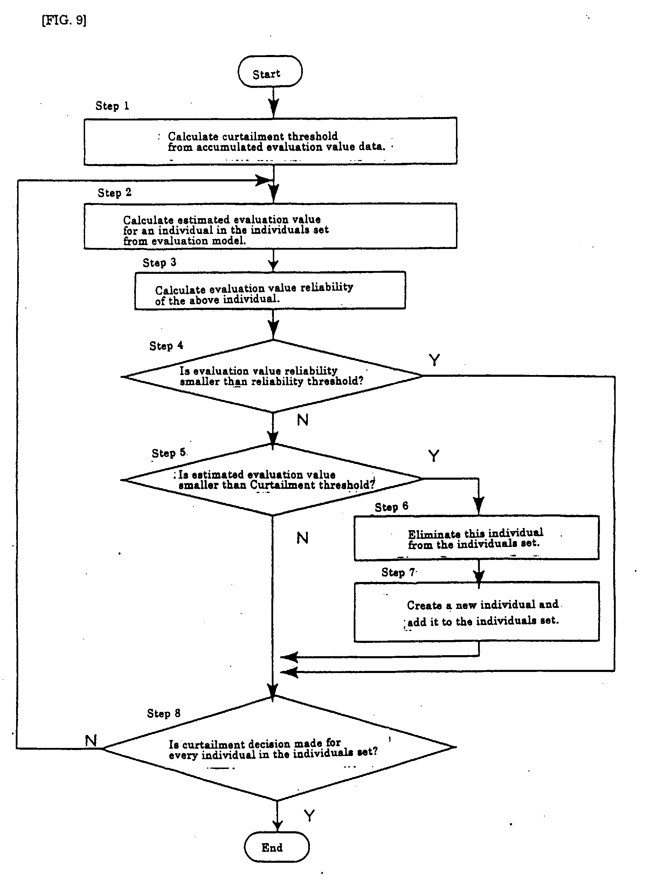

FIGs. 1 to 9 show an embodiment in which a method and a device for optimization control of control subjects of the invention are applied to the control of a vehicle engine.

FIG. 1 is a simplified drawing of the relation between an engine 1 and a controller 10 for executing an optimization control method for control subjects according to the invention.

The engine 1 is provided with an electronic throttle controlled through the controller 10 according to the amount of accelerator operation by a user. The controller 10 is constituted to provide throttle characteristics matching the preference of the user.

As shown, the controller 10 receives input information, namely the amount of accelerator operation by the user, and determines the opening degree of the electronic throttle according to the input information.

Description of the controller 10

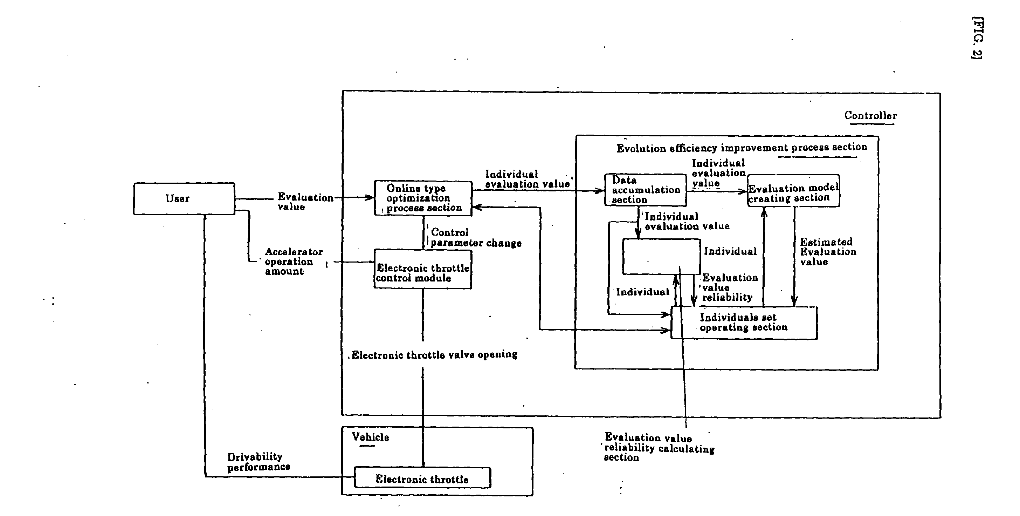

FIG. 2 is a general block diagram of the controller 10.

As shown, the controller 10 comprises;

an electronic throttle control module for determining the electronic throttle valve opening according to the accelerator operation amount,
an online type of optimization process section for evolving the control parameters of the electronic throttle control module according to evaluations made by a user while actually using a vehicle equipped with the engine so as to obtain throttle characteristics matching the preference of the user, and
an evolution efficiency improvement process section for improving the efficiency of evolution process in the optimization process section.

Description of the electronic throttle control module

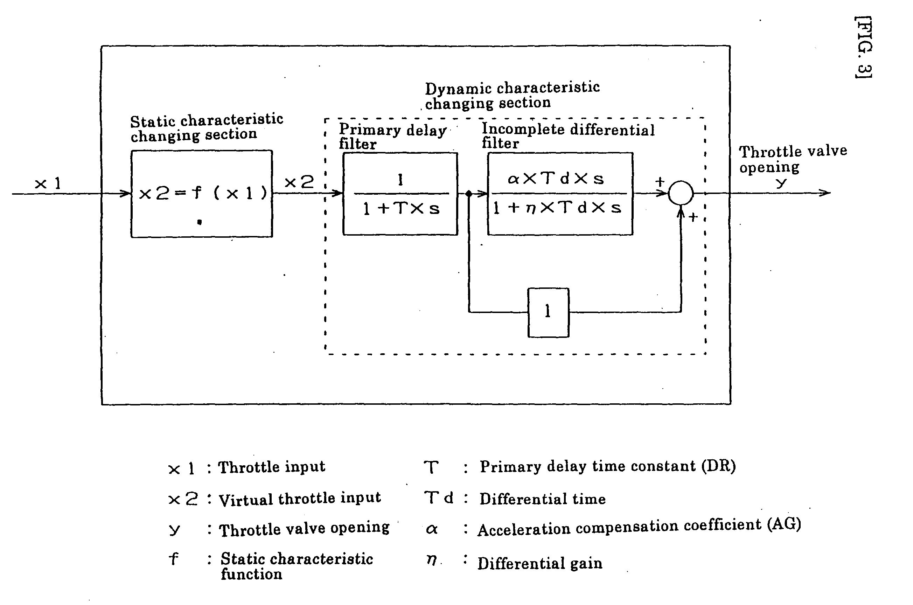

The electronic throttle control module is constituted as shown in FIG. 3 to determine the opening of the electronic throttle valve according to the amount of operation made by the user, and roughly comprises a static characteristic changing section and a dynamic characteristic changing section. Incidentally, the term "accelerator operation amount" is a piece of information obtained as a result of the operator actually operating the accelerator (not shown), and includes both information on "accelerator angle" and information on "amount of change in the accelerator."

To briefly explain the characteristics of the electronic throttle valve here, the electronic throttle valve has two characteristics; static and dynamic characteristics.

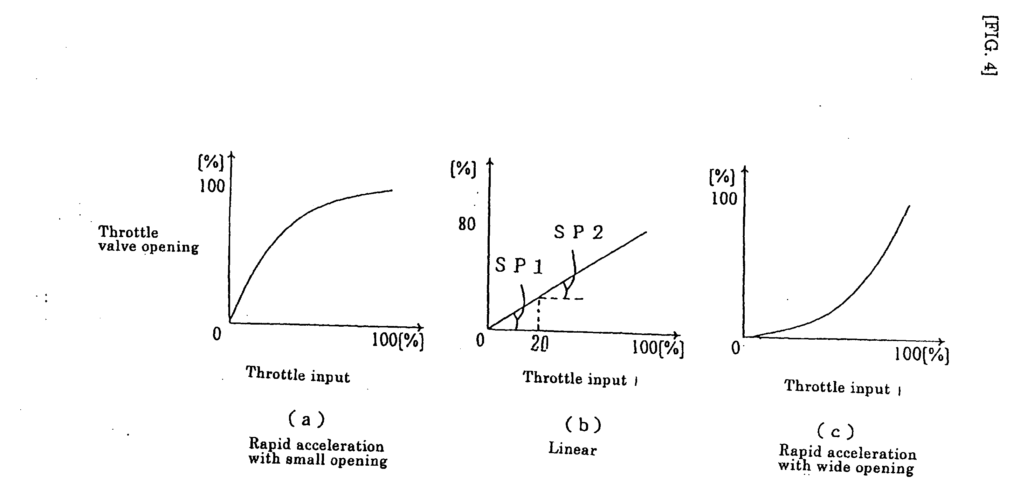

The former characteristic arises from the relation between the accelerator angle and the electronic throttle valve and affects the steady running characteristic of the vehicle. FIG. 4 shows a few examples of static throttle characteristics. Different settings of the static characteristic as shown provide different throttle openings with the same accelerator angle, for example;

*   With a small opening-rapid acceleration type (shown in FIG. 4(a)), the electronic throttle valve opens relatively wide while the accelerator angle is small, and as the accelerator angle increases, the throttle valve opening converges gradually to the wide open state.

*   With a proportional type (shown in FIG. 4(b)), the electronic throttle valve opens in proportion to the accelerator angle.

*   With a wide opening-rapid acceleration type (shown in FIG. 4(c)), the electronic throttle valve opens gradually while the accelerator angle is small, and as the accelerator angle increases, the throttle valve opens rapidly.

The static characteristic may be of any type as long as the throttle opening increases or remains unchanged as the accelerator angle increases, and may be expressed with different functions. In this embodiment, the static characteristic is optimized by optimizing the throttle valve opening rate SP1 in the range of between 0 % and 20 % and the throttle opening rate SP2 in the range of between 20 % and 100 %.

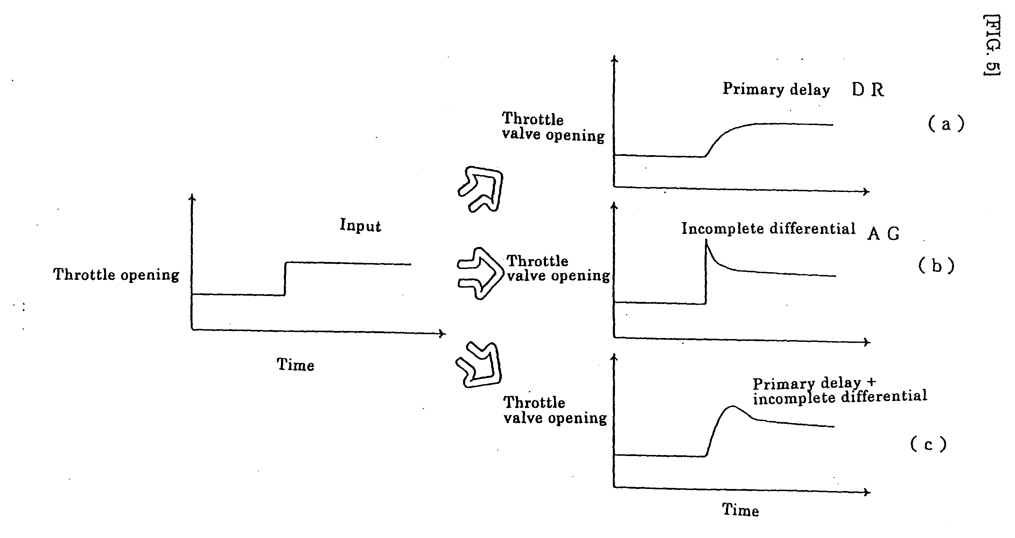

And the latter of the characteristics of the electronic throttle valve, the dynamic characteristic stems from the changing speed of the throttle valve relative to the accelerator changing speed, and affects the transient characteristic of the vehicle. This characteristic can be concretely constituted that the changing speed of the throttle valve relative to the accelerator changing speed may be changed by combining temporary delay and incomplete differential. By combining temporary delay and incomplete differential, different types of dynamic characteristics are obtained as shown in FIG. 5, for example;

*   A slow response type (shown in FIG. 5(a)) with the throttle opening relatively slowly in response to the accelerator operation.

*   A quick response type (shown in FIG. 5(b)) with the throttle opening swiftly in response to the accelerator operation, although accompanied by some spikes.

*   A type between the above two (shown in FIG. 5(c)).

In this embodiment, the dynamic characteristic is optimized by optimizing the temporary delay time constant DR and the acceleration compensation coefficient AG.

Description of the optimization process section

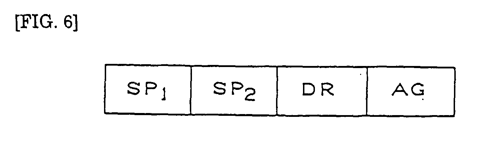

The optimization process section codes the control parameters, throttle valve opening rates SP1, SP2, temporary delay time constant DR, and acceleration compensation coefficient AG, in the electronic throttle control module shown in FIG. 6 as genic individuals, and optimizes those parameters through evolutionary calculation.

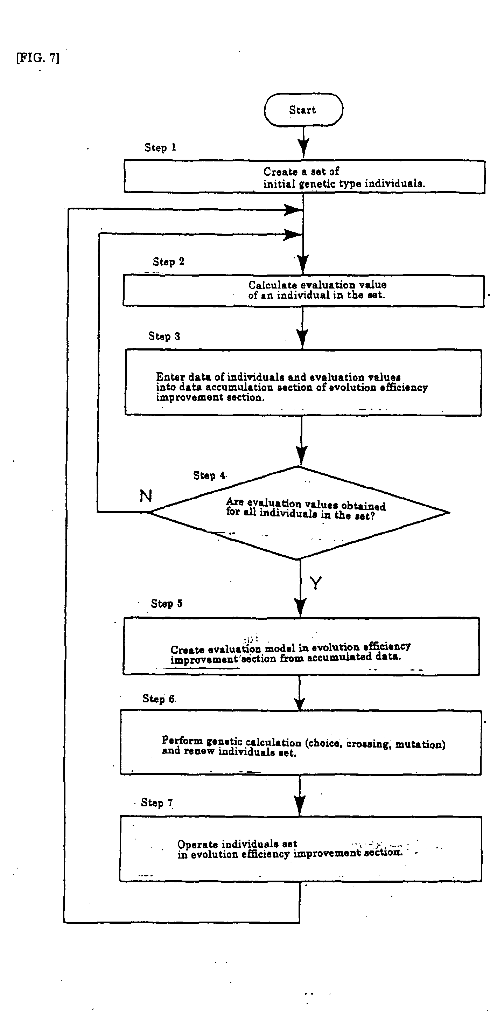

Here, an example of the optimization process using the evolutionary calculation will be described in reference to the flowchart shown in FIG. 7. FIG. 7 is a flowchart of the process in which an evolutionary efficiency improvement method is applied to an example of the optimization process using the evolutionary calculation. Here will be explained only the optimization process using the evolutionary calculation.

First, a plurality of individuals are created to form a set of individuals of the first generation (step 1).

Next, a vehicle is actually run using one of the control parameters constituting the individuals set, and the characteristic obtained by the use of the individual is evaluated (step 2).

The process consisting of the steps 1 and 2 is repeated for all the individuals in one generation (step 4).

When the evaluations for all the individuals are over, individuals to be the parent individuals for the individuals set of the next generation are chosen from among the individuals set of one generation, which are used to generate a set of individuals of the next generation by crossing or mutation (step 6).

The characteristic is optimized using the evolutionary calculation and repeating the above process until the best characteristic the user wants to have is obtained or until processing a predetermined number of generations is over.

The optimization process is arranged that the evaluation of each individual is made on the basis of ease-of-drive performance physically sensed by the user. As a result, the control parameters of the electronic throttle control module are optimized according to the evaluations made by the user, and the optimum characteristic of the electronic throttle (ease-of-drive characteristic) best suited for the evaluation given by the user is obtained.

For example, a button or the like as an input device may be employed for the user to intervene in the evolution and input an evaluation value during driving. The user can use the button after a trial ride to input an evaluation value for an individual with which the trial ride has been made. In a concrete example, the evaluation value is determined with the length of the time of pressing the button. There may be such methods as the reciprocal of the pressing time duration being multiplied by a certain factor, or calculating with a fuzzy rule. In this way, it is possible to obtain an evaluation value with a certain accuracy even if there is ambiguity in the evaluation given by the user, and the user can use the evolution method in interactive manner. It is also possible to switch from one individual being evaluated to another at the instant a predetermined period of pressing and holding the button is exceeded. Arranging in this way, it is possible for the user to change an individual having unsatisfactory characteristic immediately, so that the evolution can be made quickly. It is also arranged that the individuals are switched while the vehicle is at rest. This is effective in eliminating the adverse effect of sudden change in the throttle characteristic while the vehicle is running.

Various methods may be employed to choose the parent individuals; a roulette choice method in which individuals are chosen by probability in proportion to evaluation values (adaptability degrees) given by the user, a tournament choice method in which an individual having the best evaluation value is chosen from among n pieces of individuals chosen at random, etc. When alternation of generation is applied strictly, there is a risk of destroying individuals having high evaluation values. To avoid this, a method can be used in which elite preserving strategy is combined to unconditionally leave elite individuals (individuals having the highest evaluation value) to the next generation.

There are methods of crossing parent individuals; one point crossing, two point crossing, or normal distribution crossing. It can happen that a parent chosen for crossing is the same individual. If this is left as it is, versatility of the individuals set is lost. To avoid this, it is preferable, in the case the same individual is chosen twice for the crossing, to replace one individual with another chosen, so as to avoid crossing with the same individuals.

For the mutation, a method can be used in which values are changed at random at a certain probability for each locus of the individual. And a method is also conceivable in which perturbation is added according to normal distribution. In the case individuals chosen as parents for crossing are the same from the genetic viewpoint although they have been chosen as different individuals, both of the parent individuals to be crossed are made to mutate at a probability higher than normal.

In this embodiment, the static and dynamic characteristics are combined together into a single individual and optimized collectively. However, other methods are also conceivable in which, for example;

    1. The static characteristic is preset by a driving person, and only the dynamic characteristic is optimized.
    2. The dynamic and static characteristics are optimized independently.
    3. The static characteristic is optimized and fixed in advance, and the dynamic characteristic is optimized.

Description of evolution efficiency improvement process section

The evolution efficiency improvement process section as shown in FIG. 2 comprises; a data accumulation section, an evaluation model creating section, an individuals set operating section, and an evaluation value reliability calculating section.

Description of the data accumulation section

The data accumulation section, every time an evaluation value for an individual is inputted in the evolutionary calculating section, determines correspondence between the individual and its evaluation value and accumulates them (step 3 in the flowchart shown in FIG. 7). Incidentally, when the evolution type of calculation is made, each individual is converted from the expressive type into the genetic type for the purpose of improving calculation efficiency and compressing the data amount. However, the difference among the individuals of the genetic type is small and so creating the evaluation model to be described later becomes more difficult. Therefore, in the data accumulation section, data of the individuals are accumulated as those of the expressive type.

The term "expressive individual" above means the individual made by coding the parameter value itself, and the "genetic individual" means the individual made by converting the parameter value into bits. The conversion can be made with the equation below.

$$Xi = Yi \times \alpha + \beta$$

where X stands for each of the parameter values (SP1, SP2, DR, AG) constituting the expressive individuals, Y for each of bit values constituting the genetic individuals, i for the number of parameters (in this embodiment, i = 4) constituting the individuals, and $\alpha$ and $\beta$ are coefficients that can be changed arbitrarily.

Description of the evaluation model creating section

The evaluation model creating section, on the basis of data accumulated in the data accumulating section, creates and renews the evaluation model for predicting the evaluations of individuals given by the user (step 5 in the flowchart shown in FIG. 7).

For creating the evaluation model, an RBF (radial basis function) may be used.

In concrete terms, an input-output function, which receives input of the parameter values (SP1, SP2, DR, AG) of the four type of throttle characteristics constituting one individual and outputs evaluation values, is approximated with the RBF and used as the evaluation model.

The RBF which receives input of throttle characteristics x and outputs evaluation values y is

shown below.

$$y = f(x) = \sum_{i=1}^{N} \text{cing} \,(x; xi)$$

where, N denotes the number of accumulated data, and xi denotes the throttle characteristic accumulation data.

From the accumulated data, the basal function g and the coefficient ci of the above function are calculated and the above function is used as the evaluation model.

Here, method of calculating the basal function g and the coefficient ci from the accumulated data will be briefly described.

First, contradiction data in the accumulated data are processed. That is, in the case there are different data of the evaluation value y for the same individual x (namely the individual of the same throttle characteristic), a mean value is used as the evaluation value y of that individual. The evaluation value may also be weighted according to information of the time when the evaluation is made. For example, when the same individual gets an evaluation value of 50 points in the first evaluation and 100 points in the second evaluation, normally the evaluation value for the individual is made the mean of the two, 75 points. However, when a model is created with importance attached to new data, data are weighted so that newer data have more weight to make the evaluation value nearer to that of the new data, for example 80 points or 90 points.

When the contradiction data processing is over, the basal function g is determined using the equation below.

$$g(x; xi) = \exp\!\left(-\frac{\lVert x - xi \rVert^{2}}{2\sigma^{2}}\right)$$

where σ denotes a basal function parameter and xi denotes the throttle characteristic accumulation data.

After calculating the basal function g using the above equation, the coefficient ci is calculated with the equation below.

$$(G + \lambda I)C = Y$$

In the above equation, each element of G is an N x N matrix of gij = g(xi;xj) . The symbol I denotes an N x N unitary matrix. The symbol λ denotes a normalizing parameter. The symbol C denotes a matrix [c1, c2, . . . , cN]$^{\gamma}$ of N rows and a single column (N = the number of accumulated data). The symbol Y denotes a matrix [y1, y2, . . . , yN]$^{\gamma}$ of N rows and a single column (N = the number of accumulated data).

The creation and renewal of the above-described evaluation model can be made at any appropriate time, for example at a time when evaluations of all the individuals in a set of individual are over using all the data accumulated in the data accumulating section by that time.

Creating the evaluation model in this way with the RBF function on the basis of actual evaluation values makes it possible to estimate the evaluation values of the individuals created by the evolutionary calculation.

Of course it is also possible to create the evaluation model by the use of any control module with which learning is possible, other than the RBF function, for example a neural circuit network, a fuzzy inference method, a fuzzy neural circuit network, a CMAC, other function approximation method, etc. The RBF function makes its output 0 in a region not learned yet and having no measurement value. In contrast, the neural circuit network, etc. outputs some value even in the unlearned region. However, the reliability of the output value cannot necessarily be said to be high. Therefore, for the model for estimating the evaluation value, a control module such as the RBF function with which, although no output is obtained in the unlearned region, more reliable output is obtained in the learned region is preferable to a control module which has the possibility of outputting also in the unlearned region some values the reliability of which cannot necessarily be said to be high.

Evaluation value reliability calculating section

The evaluation value reliability calculating section calculates, on the basis of data accumulated in the data accumulating section, the reliability of the estimated evaluation values of respective individuals calculated on the basis of the evaluation model. The reliability is calculated specifically for example as follows; throttle characteristics represented with respective individuals are expressed with vectors, the distance between "an individual for which reliability is sought" and "an individual, out of those related to the accumulated data, located at the nearest distance from the individual for which the reliability is sought" is determined, and the reciprocal of the determined distance is made the reliability. When the reliability is calculated as described above, the nearer is the individual for which the evaluation value is estimated with the evaluation model to the individual already learned, the higher is the reliability obtained.

Description of the individuals set operating section

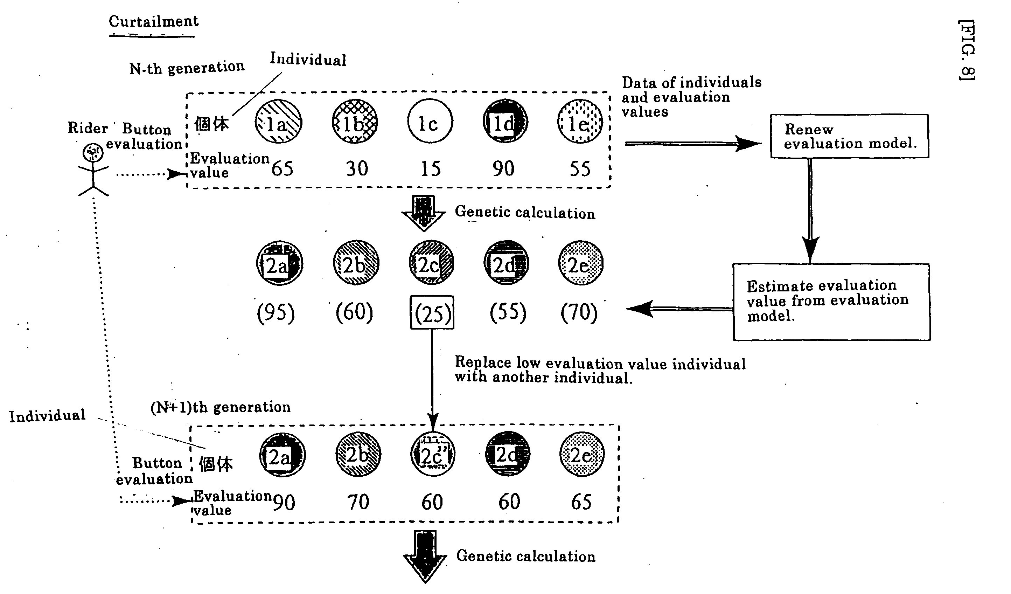

FIG. 8 shows the concept of processing the individuals set in the individuals set operating section.

The individuals set operating section, before actually evaluating the each individual in the individuals set of each generation, estimates the evaluation value for each individual using the evaluation model created or renewed in the evaluation model creating section (step 7 in the flowchart in FIG. 7).

In concrete terms, the individuals set operating section, after the actual evaluation (namely by the user) for all the individuals in the individuals set of the N-th generation is over, determines a "curtailment threshold" (step 1). The curtailment threshold may be calculated from a value (such as a mean or variance) determined statistically from evaluation values accumulated in the data accumulating section or may be a fixed value.

Next, the estimated evaluation value is calculated (step 2) for an individual in the individuals set of the (N+1)th generation using the evaluation model, and the evaluation value reliability of the estimated evaluation value is calculated in the evaluation value reliability calculating section (step 3).

And a comparison is made whether or not the evaluation value reliability is greater than a predetermined "reliability threshold (step 4). In the case the evaluation value reliability is smaller than the reliability threshold, an ensuing steps (5 and 6) based on the estimated evaluation value corresponding to the evaluation value reliability are skipped, and a determination is made whether the comparison is finished for all the individuals in the individuals set (step 8). If the comparison is not finished for all the individuals, the process goes again to the step 2. If finished, the process for the individuals in the individuals set of that generation is ended.

In the case the evaluation value reliability is determined to be greater than the reliability threshold in the above step 4, a determination is made whether or not the estimated evaluation value corresponding to the evaluation value reliability is greater than the curtailment threshold calculated in the step 1 (step 5). If greater, the process is either ended through the determination of step 8 or brought back to the step 2.

In the case the estimated evaluation value is determined to be smaller than the curtailment threshold in the step 5, the individual corresponding to the estimated evaluation value is deleted (step 6) and a newly created individual is added in place of the deleted individual to the individuals set (step 7).

To create a new individual in the step 7, the step may be arranged that a plural number of individuals are created at random, their estimated evaluation values are determined, and one of them having the highest estimated evaluation value is added to the individuals set, or that a new individual is created so that its estimated evaluation value is greater than at least that of the deleted individual, preferably greater than the curtailment threshold.

In the example conceptually shown in FIG. 8, the evaluation model is renewed on the basis of the user's evaluations for the individuals 1a to 1e of the N-th generation set, and the individuals 2a to 2e of the (N+1)th generation set are subjected to the individuals set operation. As a result, since the estimated evaluation value for the individual 2c is smaller than the curtailment threshold, the individual 2c is deleted and a new individual 2c" is added.

As described above, it is possible to create an evaluation model capable of estimating evaluation values with high accuracy by accumulating the data of combinations of the individuals and the evaluation values of the individuals set actually evaluated by the user in the evolutionary calculating section, and creating the evaluation model on the basis of the accumulated data. This also makes it possible that, every time a new generation set of individuals are created in the evolutionary calculating section, before the user making evaluations for the individuals set, to estimate the evaluation values for the individuals in the set using the evaluation model, and to delete individuals that will be given low evaluations by the user. This saves the user wasteful evaluation work and improves evolution efficiency.

In the above embodiment, the evolution efficiency improvement section is provided with the evaluation value reliability calculating section, and the evaluation value reliability obtained there is used for preventing the individuals set operating process from being applied to the estimated evaluation values having low reliability. However, the evaluation value reliability calculating section is not essential but may be provided depending on necessity in consideration of conditions of applicable subject, such as whether priority is given to higher evolution efficiency or to shorter overall calculation time and greater available memory capacity.

Next will be described another embodiment of the evolution efficiency improvement process section.

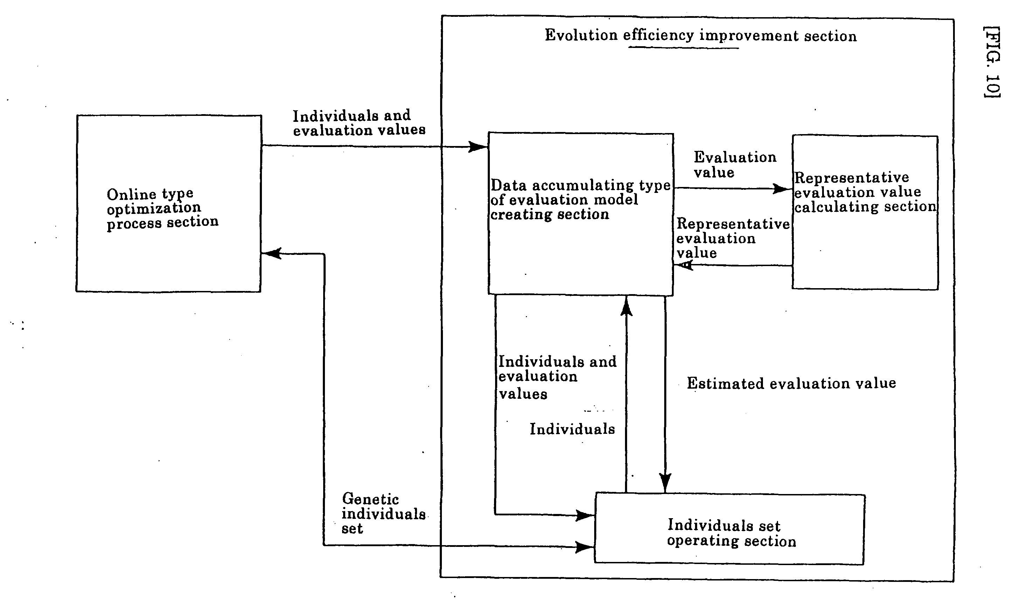

FIG. 10 shows a general block diagram of the another embodiment of the evolution efficiency improvement process section.

As shown, the evolution efficiency improvement process section comprises a data accumulation type of evaluation model creating section (hereinafter simply referred to as the evaluation model creating section), a representative evaluation value calculating section, and an individuals set operating section.

Data accumulation type of model creating section

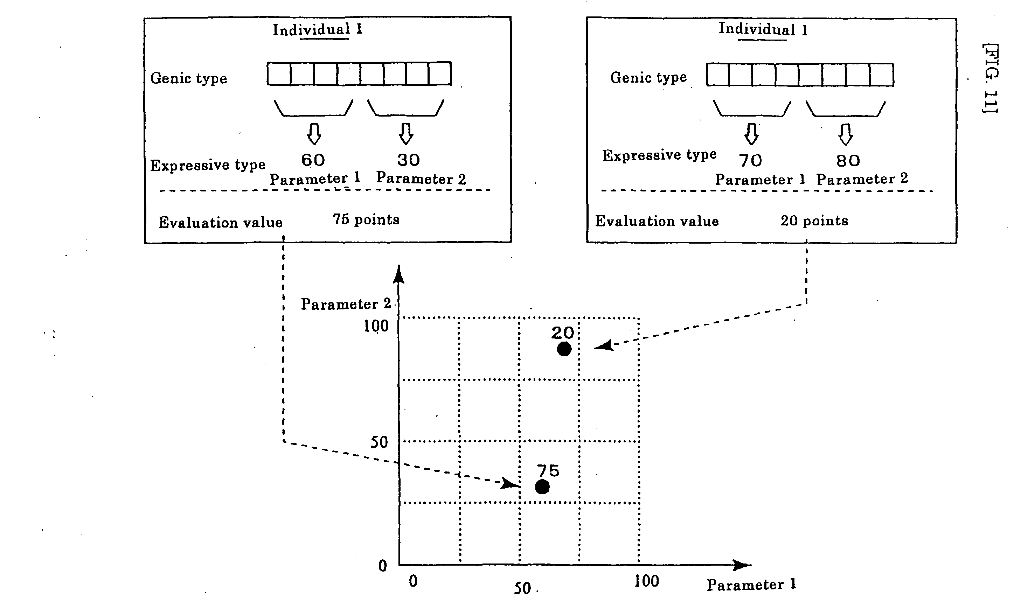

As shown in FIG. 11, the model creating section comprises divided regions corresponding to individuals used in the optimization process section. Every time an evaluation value for an individual is inputted in the optimization process section, an actual evaluation value of the individual is accumulated in the region corresponding to the individual, so that an evaluation model is created. FIG. 11 shows an example of data accumulation in the case the individual used in the optimization process section has two types of parameter values. To describe the example of FIG. 11 concretely, the individual is coded to produce two types of parameter values when it is converted from the genic type to the expressive type. The model creating section plots the parameter values relative to vertical and horizontal axes, and has 16 two-dimensional divided regions, as a result of the parameter values along each axis being divided into four equal parts. In the case the actual evaluation value given by the user for the individual 1 in the optimization process section is 75 points, the model creating section converts the individual 1 into the expressive type, and the actual evaluation value of 75 of the individual 1 is accumulated in the region corresponding to the parameters 1 and 2 of the expressive type.

When this model creating section is made to correspond to the individuals for evolving the throttle characteristics of the first embodiment, the individuals for evolving the throttle characteristics consists of the four types of throttle characteristic parameter values (SP1, SP2, DR, AG). Therefore, the divided regions of the model creating section are four dimensional. Thus, when the number of types of parameter values constituting the individuals is large, the divided regions become multidimensional, calculations become complicated, and the amount of data to be accumulated increases. In such a case, if necessary, the parameter values constituting the individuals may be further converted to other parameter values to reduce the number of types of the parameter values.

To put it concretely, in the case of the individuals of the throttle characteristics of the first embodiment, response degrees are calculated on the basis of four parameter values (SP1, SP2, DR, AG) of the throttle characteristics constituting the individuals. And on the basis of the response degrees the region of the model creating section may be divided. In this case, the model creating section may constitute an evaluation model consisting of three-dimensionally divided 125 regions as a result of dividing the response degrees for each of the low, medium, and high speeds into five equal parts.

Incidentally, if data are accumulated limitlessly in the regions, the amount of data becomes enormous. Therefore, it is preferable to limit the number of data allowed to be accumulated in each region. For example, it may be arranged that the allowable number of data accumulated in each region is up to the latest 50 and the older data are deleted.

Representative evaluation value calculating section

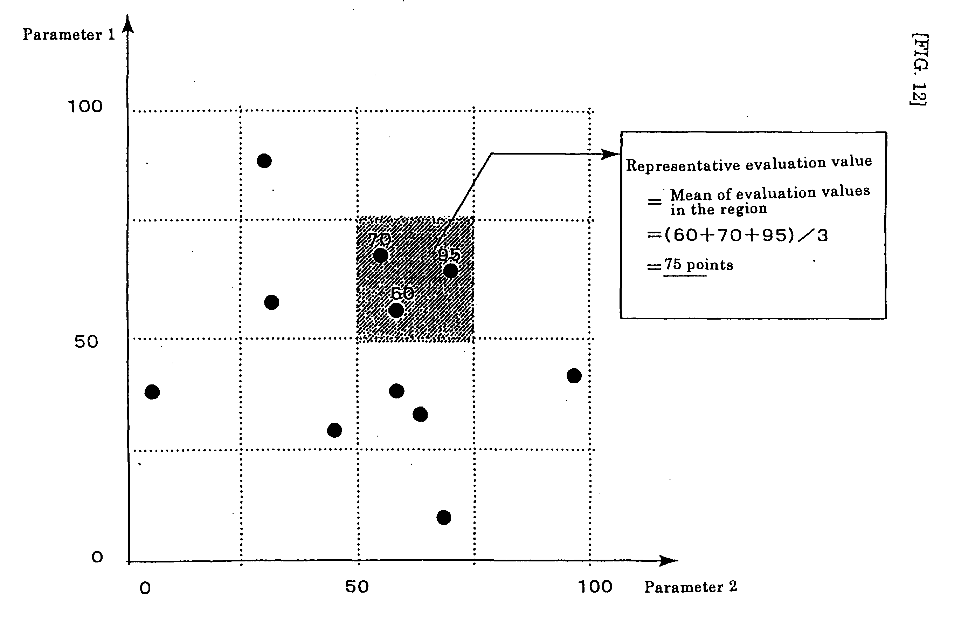

As shown in FIG. 12, the representative evaluation value calculating section calculates the mean value of the actual evaluation values of all the individuals contained in the each region (namely the divided region) of the evaluation model created in the model creating section, and the mean value is made the representative evaluation value of each region. However, for the region where no actual evaluation value is accumulated, it is arranged that the representative evaluation value is not calculated. In this way, it does not occur that a representative evaluation value having a low reliability is calculated in the unlearned part.

Individuals set operating section

The individuals set operating section, before actually evaluating each individual in the individuals set of each generation, estimates the evaluation value for each individual by the use of the evaluation model created or renewed in the evaluation model creating section, and processes each individual on the basis of the estimated evaluation value.

To explain the method of estimating the evaluation value for each individual, the region of the evaluation model is determined to which the individual for which an evaluation value is to be estimated belongs, the representative evaluation value for that region is calculated in the representative evaluation value calculating section, and the representative evaluation value is made the estimated evaluation value for that individual.

The process flow in the individuals set operating section will be briefly described.

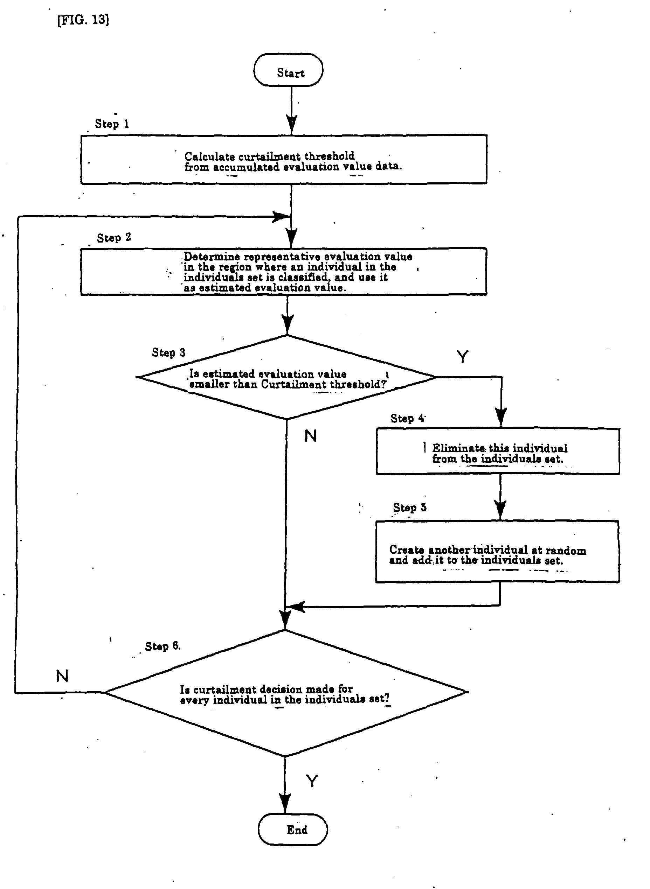

FIG. 13 shows an example of flowchart of the process in the individuals set operating section.

First, when the actual evaluation (namely the evaluation by the user) is over for all the individuals in the individuals set of the N-th generation, a "curtailment threshold" is calculated using the mean of all the evaluation values accumulated in the data accumulating section (step 1).

Next, the estimated evaluation value is calculated with the above-described method for an individual in the individuals set of the generation next to that created in the evolutionary calculating section, namely of the (N+1 )th generation (step 2).

And a determination is made whether or not the estimated evaluation value is greater than the curtailment threshold calculated in The step 1 (step 3). If not, the individual is deleted from the individuals set (step 4), and another new individual is created and added to the individuals set (step 5).

The above process is repeated until it is applied to all the individuals within the individuals set (step 6).

To create a new individual in the step 5, the step may be arranged that a plural number of individuals are created at random, their estimated evaluation values are determined, and one of them having the highest estimated evaluation value is added to the individuals set, or that a new individual is created so that its estimated evaluation value is greater than at least that of the deleted individual, preferably greater than the curtailment threshold.

As described above, constituting the evaluation model with the divided regions simplifies the calculation in comparison with constituting the evaluation model with the RBF.

The individuals set operating section, whether of the first or second embodiment, operates to calculate the estimated evaluation value of each individual, to delete the individual having an estimated evaluation value smaller than the curtailment threshold, and to add another randomly created individual to the individuals set. However, the operation applied to the individuals set is not limited to that of the above embodiments, but may be any operation as long as it enhances the evaluation of entire set of individuals when the evaluation model is used before the individuals of the set of a new generation created in the evolutionary calculating section are actually evaluated.

Another embodiment of operation applied in the individuals set operating section to the individuals set will be described below in reference to the flowchart shown in FIG. 14.

With this example, first the estimated evaluation values are calculated for all the individuals in the individuals set of a new generation created in the optimization process section (step 1).

An optimum individual having the highest evaluation value with the current evaluation model is created using the evaluation model (step 2) and is used to replace an individual having the lowest evaluation value in the new generation of the individuals set created in the optimization process section (step 3).

To put it concretely, when the evaluation model is made with an RBF, an autonomous evolution section, separate from the optimization process section which is the subject of efficiency improvement, is provided to autonomously evolve individuals according to evaluations given with the evaluation model, and the individual evolved with the autonomous evolution process section is made the optimum individual.

And when the evaluation model is made of divided regions, any individual contained in the region having the highest representative evaluation value is made the optimum individual.

As described above, simply operating the individuals set so that the individual having the lowest estimated evaluation value is replaced with the optimum individual makes it unnecessary to make determination for every individual and to simplify the individuals set operation process.

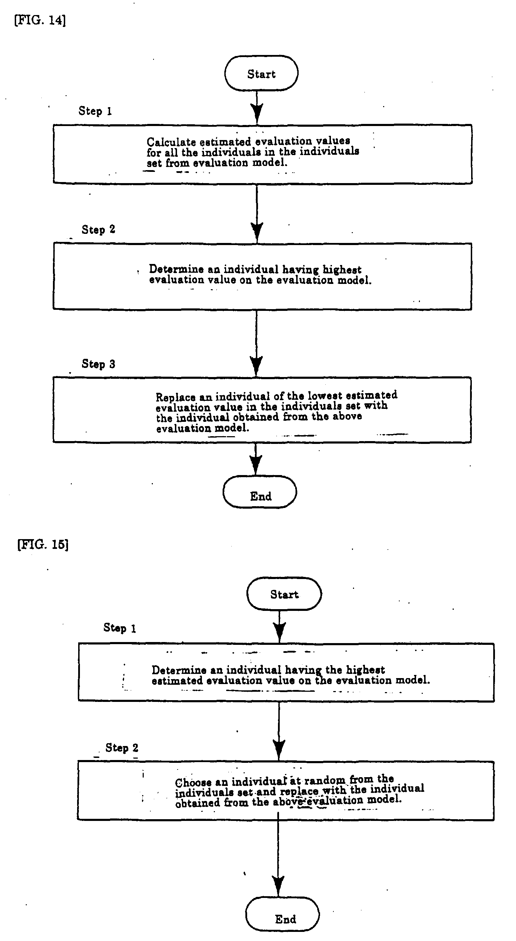

FIG. 15 is the flowchart of still another embodiment of the operation method applied to the individuals set in the individuals set operating section.

In this example, first an optimum individual having the highest evaluation value with the current evaluation model is created using the evaluation model (step 1), an individual is chosen at random out of the individuals set of the new generation created in the optimization process section, and the individual is replaced with the optimum individual.

As described above, choosing an individual at random from the individuals set and replacing the chosen individual with the optimum individual eliminates the necessity of calculating the estimated evaluation values for all the individuals in the set. Thus, the operation applied to the individuals set is further simplified.

In the above embodiment, at least an individual out of the individuals set created in the optimization process section is deleted and individuals corresponding in number to the deleted individual or individuals is or are newly created using the evaluation model and added to the individuals set. However, the operation method of the individuals set using the evaluation model is not limited to that of the above embodiment but may be any other method as long as the individuals set is operated before the individuals are actually evaluated. For example, the method may be simply addition of an individual created using the evaluation model without deleting individuals at all, or may be simple deletion only of an individual from the individuals set.

In the above embodiment, the optimization process section uses the so-called interactive type of evaluation in which each individual in the individuals set is evaluated directly by the user. However, the constitution of the optimization process section need not be limited to the above embodiment but may be for example the so-called autonomous type of evaluation in which each individual in the individuals set is evaluated with an actual evaluation purpose model provided in the controller.

The controller of the above embodiment performs the so-called one-layer type of evolution process in which the controller evolves directly, in the optimization process section, the control parameter of the basic control module which directly outputs the operation amount to the control subject. However, the manner of performing the process is not limited to that of this embodiment but may be otherwise, for example:

* The basic control module for outputting the operation amount directly to the control subject is divided into an execution control module and a learning purpose control module to perform the so-called two-layer type evolution process in which the control parameter evolved in the optimization process section is made to be learned in the learning purpose control module. After that, the learning purpose control module is replaced with the execution purpose module.

* A compensation control module for outputting compensation information to the basic control module is provided in addition to the basic control module to perform the so-called two-layer type evolution process in which the control parameters of the compensation control module are directly evolved in the optimization control section.

* The compensation control module is divided into two, one for learning and the other for execution to perform the so-called three-layer type evolution process in which the control parameter evolved in the optimization process section is learned in the learning control module which is then replaced with the execution control module.

As described above, the online type of optimization control method and device of the invention are constituted that control parameters affecting the characteristics of control subjects are made to evolve while reflecting actual evaluations by repeating the steps of; creating a plurality of individuals corresponding to the control parameters, making a set of the individuals one generation, choosing parent individuals for the next generation from the individuals set while reflecting at least actual evaluations, and creating a set of individuals for the next generation on the basis of at least the parent individuals. An evaluation model is created on the basis of relation between each individual and the actual evaluation value for each individual, and the evaluation model is used before actual evaluation is made. As a result, it is possible in advance to eliminate individuals that are expected to get low evaluations or add individuals that are expected to get high evaluations. This permits a user to enhance the entire evaluation of the individuals set before performing actual evaluation, to avoid wasteful evaluation, and to improve evolution efficiency.

Although several embodiments of the invention have been described by example of an internal combustion engine, the invention is not limited to this. This invention is directed to all control subjects like robotors, machines, etc.

**Claims**

1. An online type of optimization control method wherein control parameters affecting the characteristics of control subjects are made to evolve while being made to reflect actual evaluations by repeating the steps of; creating a plurality of individuals corresponding to the control parameters, deeming a set of the individuals to be one generation, choosing parent individuals for the next generation from the individuals set while causing at least actual evaluations to be reflected, and creating a set of individuals for the next generation on the basis of at least the parent individuals, wherein an evaluation model is created on the basis of relation between each individual and the evaluation for the individual, and that the evaluation model is used before making the actual evaluation.

2. A control method according to claim 1, **characterized in that** the actual evaluation is an evaluation made by a user.

3. A control method according to claim 1, **characterized in that** the actual evaluation is an evaluation made with an actual evaluation model other than the evaluation model.

4. A control method according to one of the preceding claims 1 to 3, **characterized in that** the evaluation model consists of a function using individuals as inputs and outputting estimated evaluation values.

5. A control method according to claim 4, **characterized in that** the function is a radial basis function.

6. A control method according to one of the preceding claims 1 to 3, **characterized in that** the evaluation model consists of a plurality of divided regions corresponding to a plurality of individuals, accumulates evaluation values of the individual actually evaluated in corresponding regions, and calculates estimated evaluation values of the divided regions on the basis of the evaluation values accumulated in respective regions.

7. A control method according to one of the preceding claims 1 to 6, **characterized in that** the evaluation value of each individual constituting the individuals set is estimated by the use of an evaluation model and deletion of individuals in the individuals set is made on the basis of the estimated evaluation value.

8. A control method according to claim 7, **characterized in that** individuals having estimated evaluation values lower than a specified threshold value are deleted from the individuals set.

9. A control method according to claim 7, **characterized in that** any number of individuals are deleted in the order of lower evaluation value from the individuals set.

10. A control method according to one of the preceding claims 7 to 9, **characterized in that** the evaluation model is used to create a new individual having an estimated evaluation value higher than that of at least a deleted individual and the new individual is added to the individuals set.

11. A control method according to one of the preceding claims 1 to 9, **characterized in that** the evaluation model is used to create individuals at random and any number of individuals are added to the individuals set in the order of higher estimated evaluation value.

12. A control method according to one of the preceding claims 1 to 9, **characterized in that** the evaluation model is used to create an individual having an estimated evaluation value higher than at least a specified threshold value and the individual is added to the individuals set.

**13.** A control method according to one of the preceding claims 1 to 6, **characterized in that** an individual to be deleted at random from the individuals set is determined and deleted, and an individual is created to have a high estimated evaluation value with the current evaluation model is added in place of the deleted individual.

**14.** A control method according to claim 13, **characterized in that** an individual to be added to the individuals set is created to have an estimated evaluation value higher than a specified threshold value.

**15.** An optimization control device comprising;

a control section, an online type of optimization process section, and an evolution efficiency improving section;
the control section is adapted to output an operation amount for a control subject on the basis of specified input information,
the online type of optimization process section is adapted to cause control parameters affecting the characteristics of control subjects to evolve while reflecting actual evaluations by being adapted to repeat the steps of;

creating a plurality of individuals corresponding to the control parameters in the control device,
deeming a set of the individuals to be one generation,
choosing parent individuals for the next generation from the set of individuals while causing at least actual evaluations to be reflected, and
creating a set of individuals of the next generation on the basis of at least the parent individuals,
the evolution efficiency improving section comprising;
an evaluation model creating section for creating an evaluation model on the basis of relation between an individual and the actual evaluation of the individual, and
an individuals set operating section for pre-processing the individuals set by the use of the evaluation model before making actual evaluation.

**16.** A control device according to claim 15, **characterized by** a means for receiving an evaluation made by a user as the actual evaluation.

**17.** A control device according to claim 15, **characterized in that** an actual evaluation model other than the evaluation model is provided and actual evaluation is performable with the actual evaluation model.

**18.** A control device according to one of the preceding claims 15 to 17, **characterized in that** the evaluation model creating section comprises a data accumulating section for accumulating data of individuals and of actual evaluation values for the individuals and that an evaluation model is createable on the basis of the data accumulated in the data accumulating section.

**19.** A control device according to claim 18, **characterized in that** the evaluation model creating section is adapted to create an evaluation model consisting of a function using individuals as inputs and outputting estimated evaluation values.

**20.** A control device according to claim 19, **characterized in that** the function is a radial basis function.

**21.** A control device according to claim 18, **characterized in that** the evaluation model creating section consists of a plural number of divided regions corresponding to the individuals, is adapted to accumulate evaluation values of actually evaluated individuals in corresponding regions, and a data accumulation type of evaluation model for calculating estimated evaluation values of the divided regions are createable on the basis of evaluation values accumulated in respective regions.

**22.** A control method according to one of the preceding claims 1 to 14, **characterized in that** the control subject is an internal combustion engine, robotor or machine, etc.

**23.** A control device according to one of the preceding claims 15 to 21, **characterized in that** the control subject is an internal combustion engine, robotor or machine, etc.

EP 1 056 042 A2

[FIG. 1]

Controller 10

Accelerator operation amount

Evaluation value

Electronic throttle valve opening

Engine

Air cleaner

Electronic throttle

[FIG. 2]

EP 1 056 042 A2

FIG. 2

[FIG. 3]

EP 1 056 042 A2

Dynamic characteristic
changing section

Static characteristic
changing section

Primary delay
filter

Incomplete differential
filter

Throttle valve
opening
y

$\times 1$

$\times 2 = f \ (\times 1)$

$\times 2$

$$\dfrac{1}{1 + T \times s}$$

$$\dfrac{\alpha \times T d \times s}{1 + \eta \times T d \times s}$$

+

+

1

$\times 1$ : Throttle input

$\times 2$ : Virtual throttle input

$y$ : Throttle valve opening

$f$ : Static characteristic
function

$T$ : Primary delay time constant (DR)

$T d$ : Differential time

$\alpha$ : Acceleration compensation coefficient (AG)

$\eta$ : Differential gain

14

[FIG. 4]

EP 1 056 042 A2

[%]
100

Throttle
valve opening

0                           100[%]

Throttle input

( a )

Rapid acceleration
with small opening

[%]

80

S P 2

S P 1

0        20              100[%]

Throttle input ı

( b )

Linear

[%]
100

0                        100[%]

Throttle input ı

( c )

Rapid acceleration
with wide opening

[FIG. 5]

EP 1 056 042 A2

Throttle opening

Input

Time

Throttle
valve opening

Primary delay    D R

( a )

Throttle
valve opening

Incomplete differential   A G

( b )

Throttle
valve opening

Primary delay +
incomplete differential

( c )

Time

[FIG. 6]

| SP₁ | SP₂ | DR | AG |

[FIG. 7]

```
                          ( Start )
                              │
Step 1                        ▼
         ┌───────────────────────────────────────┐
         │            Create a set of             │
         │     initial genetic type individuals.  │
         └───────────────────────────────────────┘
                              │
   ┌──────────────────────────┼─────────────────►
   │  ┌───────────────────────┼───────────────►
   │  │                       ▼
Step 2
   │  │  ┌───────────────────────────────────────┐
   │  │  │       Calculate evaluation value        │
   │  │  │      of an individual in the set.       │
   │  │  └───────────────────────────────────────┘
   │  │                       │
Step 3                        ▼
   │  │  ┌───────────────────────────────────────┐
   │  │  │  Enter data of individuals and evaluation values │
   │  │  │  into data accumulation section of evolution efficiency │
   │  │  │  improvement section.                   │
   │  │  └───────────────────────────────────────┘
   │  │                       │
   │  │                       ▼
Step 4
   │  │        ◇ Are evaluation values obtained ◇
   │  └── N ──┤ for all individuals in the set? │
   │          ◇─────────────────────────────────◇
   │                          │ Y
Step 5                        ▼
   │     ┌───────────────────────────────────────┐
   │     │   Create evaluation model in evolution efficiency │
   │     │   improvement section from accumulated data. │
   │     └───────────────────────────────────────┘
   │                          │
Step 6                        ▼
   │     ┌───────────────────────────────────────┐
   │     │  Perform genetic calculation (choice, crossing, mutation) │
   │     │  and renew individuals set.             │
   │     └───────────────────────────────────────┘
   │                          │
Step 7                        ▼
   │     ┌───────────────────────────────────────┐
   │     │  Operate individuals set                │
   │     │  in evolution efficiency improvement section. │
   │     └───────────────────────────────────────┘
   │                          │
   └──────────────────────────┘
```

[FIG. 8]

EP 1 056 042 A2

Curtailment

N-th generation    Individual

Rider  Button
evaluation

個体    1a    1b    1c    1d    1e

Evaluation value    65    30    15    90    55

Data of individuals and evaluation values

Renew evaluation model.

Genetic calculation

2a    2b    2c    2d    2e

(95)    (60)    (25)    (55)    (70)

Estimate evaluation value from evaluation model.

Replace low evaluation value individual with another individual.

Individual

(N+1)th generation

Button evaluation    個体    2a    2b    2c''    2d    2e

Evaluation value    90    70    60    60    65

Genetic calculation

[FIG. 9]

```
                              ( Start )
                                  │
        Step 1                    ▼
    ┌─────────────────────────────────────────────────────┐
    │   : Calculate curtailment threshold                 │
    │     from accumulated evaluation value data. ·       │
    └─────────────────────────────────────────────────────┘
                                  │
        Step 2                    ▼
    ┌─────────────────────────────────────────────────────┐
    │   Calculate estimated evaluation value              │
    │   for an individual in the individuals set          │
    │   from evaluation model.                            │
    └─────────────────────────────────────────────────────┘
                                  │
           Step 3                 ▼
        ┌──────────────────────────────────────────┐
        │   Calculate evaluation value reliability  │
        │   of the above individual.                │
        └──────────────────────────────────────────┘
                                  │
       Step 4                     ▼
            ◇ Is evaluation value reliability        ──── Y ────┐
              smaller than reliability threshold?               │
                                  │                             │
                                  N                             │
                                  ▼                             │
       Step 5.                                                  │
            ◇ : Is estimated evaluation value      ──── Y ──┐   │
                smaller than Curtailment threshold?         │   │
                                  │          Step 6         ▼   │
                                  N    ┌──────────────────────┐ │
                                  │    │  Eliminate this       │ │
                                  │    │  individual from      │ │
                                  │    │  the individuals set. │ │
                                  │    └──────────────────────┘ │
                                  │          Step 7             │
                                  │    ┌──────────────────────┐ │
                                  │    │  Create a new         │ │
                                  │    │  individual and       │ │
                                  │    │  add it to the        │ │
                                  │    │  individuals set.     │ │
                                  │    └──────────────────────┘ │
                                  │             │               │
                                  ▼◄────────────┴───────────────┘
       Step 8
     N      ◇ Is curtailment decision made for
              every individual in the individuals set?
                                  │
                                  Y
                                  ▼
                              ( End )
```

[FIG. 10]

EP 1 056 042 A2

**Evolution efficiency improvement section**

Online type optimization process section

Individuals and evaluation values

Data accumulating type of evaluation model creating section

Evaluation value

Representative evaluation value calculating section

Representative evaluation value

Individuals and evaluation values

Estimated evaluation value

Individuals

Genetic individuals set

Individuals set operating section

[FIG. 11]

EP 1 056 042 A2

Individual 1

Genic type

Expressive type    60      30

Parameter 1   Parameter 2

Evaluation value     75 points

Individual 1

Genic type

Expressive type    70      80

Parameter 1   Parameter 2

Evaluation value      20 points

Parameter 2

100    20

50

75

0

0    50    100    Parameter 1

[FIG. 12]

Parameter 1

Representative evaluation value

$= \frac{\text{Mean of evaluation values}}{\text{in the region}}$

$=(60+70+95)/3$

$=\underline{75 \text{ points}}$

Parameter 2

EP 1 056 042 A2

23

[FIG. 13]

```
                          ┌─────────┐
                          │  Start  │
                          └────┬────┘
                               │
       Step 1                  ▼
   ┌──────────────────────────────────────────────────────┐
   │         Calculate curtailment threshold              │
   │         from accumulated evaluation value data.      │
   └──────────────────────────────────────────────────────┘
                               │
        ┌──────────────────────┤
        │      Step 2          ▼
        │  ┌──────────────────────────────────────────────────┐
        │  │ Determine representative evaluation value        │
        │  │ in the region where an individual in the         │
        │  │ individuals set is classified, and use it        │
        │  │ as estimated evaluation value.                   │
        │  └──────────────────────────────────────────────────┘
        │                      │
        │     Step 3           ▼                    Y
        │        ◇──────────────────────────◇────────────┐
        │         Is estimated evaluation value           │
        │         smaller than Curtailment threshold?     │
        │        ◇──────────────────────────◇             │
        │                   │                  Step 4      ▼
        │                 N │          ┌─────────────────────────┐
        │                   │          │ Eliminate this individual│
        │                   │          │ from the individuals set.│
        │                   │          └─────────────────────────┘
        │                   │                  Step 5      │
        │                   │          ┌─────────────────────────┐
        │                   │          │ Create another individual at random │
        │                   │          │ and add it to the individuals set.  │
        │                   │          └─────────────────────────┘
        │                   ▼                             │
        │     Step 6.     ◇◄─────────────────────────────┘
        │  N   ◇──────────────────────────────◇
        └──────  Is curtailment decision made for
                 every individual in the individuals set?
                ◇──────────────────────────────◇
                               │
                             Y │
                               ▼
                          ┌─────────┐
                          │   End   │
                          └─────────┘
```

[FIG. 14]

```
                        ( Start )
                            │
Step 1                      ▼
┌───────────────────────────────────────────────┐
│   Calculate estimated evaluation values        │
│   for all the individuals in the individuals   │
│   set from evaluation model.                   │
└───────────────────────────────────────────────┘
                            │
Step 2                      ▼
┌───────────────────────────────────────────────┐
│   Determine an individual having highest       │
│   evaluation value on the evaluation model.    │
└───────────────────────────────────────────────┘
                            │
Step 3                      ▼
┌───────────────────────────────────────────────┐
│   Replace an individual of the lowest estimated│
│   evaluation value in the individuals set with │
│   the individual obtained from the above       │
│   evaluation model.                            │
└───────────────────────────────────────────────┘
                            │
                            ▼
                        ( End )
```

[FIG. 15]

```
                        ( Start )
                            │
Step 1                      ▼
┌───────────────────────────────────────────────┐
│   Determine an individual having the highest   │
│   estimated evaluation value on the evaluation │
│   model.                                       │
└───────────────────────────────────────────────┘
                            │
Step 2                      ▼
┌───────────────────────────────────────────────┐
│   Choose an individual at random from the      │
│   individuals set and replace with the individual│
│   obtained from the above evaluation model.    │
└───────────────────────────────────────────────┘
                            │
                            ▼
                        ( End )
```

25